# EUROPEAN PATENT APPLICATION

(11) **EP 4 279 346 A1**
(43) Date of publication of application: **22.11.2023**
(21) Application number: 22174274.5
(22) Date of filing: 19.05.2022
(51) Int. Cl.: B60T 17/00, B01D 53/26

(54) **AIR TREATMENT DEVICE**

(71) Applicant: KNORR-BREMSE Systeme für Nutzfahrzeuge GmbH, 80809 München (DE)
(72) Inventor: TOTH, Zoltan Laszlo, 6100 Kiskunfélegyháza (HU); POLYAK, Tibor, 6044 Hetényegyháza (HU); OLAH, Tibor, 6000 Kecskemét (HU); PALICSKA, Domonkos, 6000 Kecskemét (HU)

(57) **Abstract**

The present invention provides an air treatment device (100, 200, 300, 400, 600) for a vehicle, especially utility vehicle, the air treatment device (100, 200, 300, 400, 600) comprising: an air treatment cartridge (102) having a connecting base portion (108), a housing structure (104) having a connecting neck portion (110), and a coupling adapter (106) having a leading portion (112) configured to connect or be connected to the connecting base portion (108) and a trailing portion (114) configured to connect or be connected to the connecting neck portion (110), wherein the air treatment cartridge (102) and the housing structure (104) are connectable or connected to each other by means of the coupling adapter (106).

## Description

The present invention relates to an air treatment device for a vehicle, especially utility vehicle. In particular, the present invention relates to an air treatment device for a vehicle, especially utility vehicle, with a housing structure and an air treatment cartridge being connectable to each other via a coupling adapter.

In the field of vehicles and especially utility vehicles, usually pneumatic systems are used for brakes, suspension and other auxiliary systems. The necessary compressed air is delivered by a compressor. An air supply system is typically equipped with an air treatment device such as an air dryer unit, which serves to decrease the water content of the air delivered by the compressor.

Typically, cartridges can be connected to the system, in particular to the air treatment device for air treatment, during an assembly process. For example, an air dryer cartridge such as a desiccant cartridge can be used.

In this regard, different types of cartridges can be used for different applications. One challenge is to make sure that the right type of cartridge is provided for the respective intended application. For example, normal or oil separator cartridges (OSC) as well as cartridges for different pressure levels etc. can be provided depending on said application. However, it is not secured that the right type of cartridge is assembled for the right application. Hence, if the wrong cartridge is assembled, technical issues (e.g., with respect to the pneumatic systems) can arise, e.g., due to an insufficient performance of the cartridge or due to an unsuitability of the cartridge's properties (e.g., not being fitted for the particular/intended application). Further, maintenance intervals might be missed and/or not complied with, which may also lead to further technical issues (e.g., with respect to the pneumatic systems). Accordingly, it is of utmost significance that the right cartridge is used for the right application.

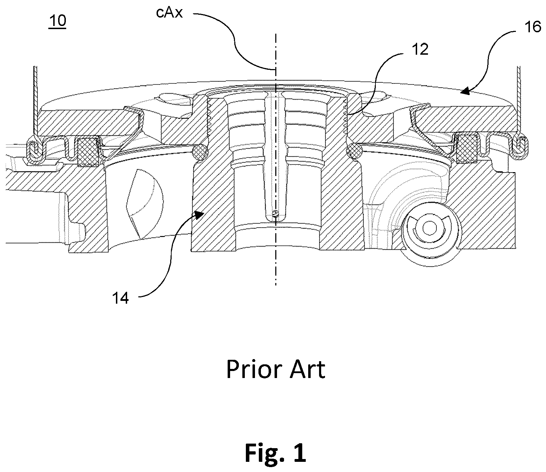

In this regard, for example, **Fig. 1** illustrates a partial cross-sectional view of an air treatment device 10 as known in the art. In this respect, a connection 12 between a housing 14 and a cartridge 16 of an air treatment device 10 is particularly shown. Such a connection 12 is generally achieved by directly screwing the cartridge 16 to the housing 14, thereby establishing a screw connection, which usually has a metric screw thread. Hence, the cartridge 16 can usually be combined with an air treatment device 10 in an undefined manner, i.e., for several applications.

In view of the above, it is the problem of the invention to improve an air treatment device advantageously, in particular with respect to avoiding mis-assembly concerning different applications as well as to user-friendliness.

According to the invention, this problem is solved by an air treatment cartridge according to claim 1.

Correspondingly, an air treatment device for a vehicle, especially utility vehicle, is provided, wherein the air treatment device comprises: an air treatment cartridge having a connecting base portion, a housing structure having a connecting neck portion, and a coupling adapter having a leading portion configured to connect or be connected to the connecting base portion and a trailing portion configured to connect or be connected to the connecting neck portion, wherein the air treatment cartridge and the housing structure are connectable or connected (e.g., are only connectable or connected) to each other by means of the coupling adapter.

The invention is based on the basic idea that the air treatment cartridge and the housing structure cannot be assembled without the coupling adapter, to thereby prevent mis-assembly with respect to different applications. Hence, air treatment cartridges as commonly used in the industry may not be assembled to the housing structure without the coupling adapter. The coupling adapter may be designed to have a unique design and/or configuration being assigned/dedicated to a particular application. Hence, the coupling adapter may secure that the right cartridge is used for the intended application related to the particular combination/connection of the air treatment cartridge and the housing structure. In this respect, the coupling adapter may allow the air treatment cartridge and the housing structure to be connected in a customizable manner (depending on the coupling adapter), e.g., forming an unique connection associated to a particular application by the usage of said coupling adapter. Further, the housing structure and/or coupling adapter may be designed and/or configured to allow the usage of air treatment cartridges as commonly used in the industry, wherein the coupling adapter may correspondingly be configured to be assigned to a particular application.

The air treatment cartridge may be constructed along an axis, e.g., a central axis or a shifted axis. In particular, the air treatment cartridge may be constructed to be substantially axially symmetric relative to a/the central axis or a/the shifted axis. Alternatively, the air treatment cartridge may be constructed to be substantially axially asymmetric relative to a/the central axis or a/the shifted axis.

It may be conceivable that, when the air treatment cartridge and the housing structure are aligned to each other for the coupling adapter to be connected to the connecting base portion and to the connecting neck portion, the connecting base portion and the connecting neck portion are spaced to each other by a gap (e.g., a gap extending along the axis (e.g., central axis), or, e.g., perpendicular thereto), wherein, when the coupling adapter is connected to the connecting base portion and to the connecting neck portion, the coupling adapter bridges the gap for connecting the air treatment cartridge and the housing structure to each other. In particular, due to the gap between the connecting base portion of the air treatment cartridge and the connecting neck portion of the housing structure, air treatment cartridges as commonly used in the industry may not be assembled to the housing structure without the coupling adapter. Further, due to the gap between the connecting base portion of the air treatment cartridge and the connecting neck portion of the housing structure, the connecting neck portion may be allowed to have increased dimensions, e.g., an increased diameter, in particular, for having an improved strength due to more material.

The trailing portion may comprise a first screw thread portion for connecting the coupling adapter to the connecting neck portion, wherein the connecting neck portion may comprise a first counter screw thread portion corresponding to the first screw thread portion. Since the respective screw threads may allow for a wide variability of screw thread configurations, numerous solutions may be provided for adapting the combination of the air treatment cartridge, the coupling adapter and the housing structure to one or more particular applications.

The first screw thread portion may be configured as a female screw thread portion or as a male screw thread portion. Accordingly, in case of the first screw thread portion being the female screw thread portion, the first counter screw thread portion may be a male screw thread portion, and, in case of the first screw thread portion being the male screw thread portion, the first counter screw thread portion may be a female screw thread portion.

The leading portion may comprise a second screw thread portion for connecting the coupling adapter to the connecting base portion, wherein the connecting base portion may comprise a second counter screw thread portion corresponding to the second screw thread portion.

The second screw thread portion may be configured as a male screw thread portion. Alternatively, the second screw thread portion may be configured as a female screw thread portion. Accordingly, in case of the second screw thread portion being the male screw thread portion, the second counter screw thread portion may be a female screw thread portion, and, in case of the second screw thread portion being the female screw thread portion, the second counter screw thread portion may be a male screw thread portion.

The leading portion may comprise one or more protrusions and/or one or more recesses, and the connecting base portion may comprise one or more recesses and/or one or more protrusions in a corresponding manner with respect to the one or more protrusions and/or the one or more recesses of the leading portion (i.e., each protrusion may be associated with a corresponding recess, and vice versa), wherein, when the air treatment cartridge is connected to the coupling adapter, the one or more protrusions and/or the one or more recesses of the connecting base portion and the leading portion are engaged with each other in a respective corresponding manner (i.e., each protrusion may be substantially accommodated in a corresponding recess). The protrusions and the recesses may additionally serve to ensure that the right cartridge is connected or connectable to the right coupling adapter and, accordingly, to the right housing structure and, hence, is used for the intended application. Each combination of protrusions and/or recesses of the leading portion and the connecting base portion may be associated with a particular application and/or with a unique customer solution. In particular, the number of protrusions and/or recesses and/or their position on the connecting base portion and/or the leading portion may allow for a customized connecting solution between the air treatment cartridge and the coupling adapter, thereby providing a unique solution for a particular application. Further, the protrusions and the recesses may respectively act as guiding elements during an/the assembly process of the air treatment cartridge and the coupling adapter, thereby facilitating the assembly process as a whole. Additionally, the air treatment cartridge may be rotationally fixed with respect to the coupling adapter.

The coupling adapter may be configured to connect or be connected to the connecting base portion in a non-removable manner, and the coupling adapter may be configured to connect or be connected to the connecting neck portion in a removable manner. Accordingly, since the coupling adapter may be non-removably connected to the air treatment cartridge (e.g., during assembly/manufacturing of the cartridge), misusage and/or manipulation may be prevented, to thereby guarantee a safe and reliable operation of the air treatment device, while the air treatment cartridge together with the coupling adapter may still be exchanged in a simple manner (since the coupling adapter is removably connected to the housing structure).

The coupling adapter may comprise at least one fixing means being arranged at or adjacent to an end of the leading portion for connecting the coupling adapter to the connecting base portion in a non-removable manner. Accordingly, the fixing means may be arranged in or with the coupling adapter in a simple manner.

The fixing means may be configured as a retaining ring and a groove configured to receive the retaining ring and arranged adjacent to the end of the leading portion for allowing the retaining ring to lock the coupling adapter to the connecting base portion, when the coupling adapter is mounted to the air treatment cartridge and the retaining ring is received by the groove. Hence, due to the retaining ring, the coupling adapter may reliably be held in its mounted state with the connecting base portion, i.e., the air treatment cartridge.

The fixing means may be configured as a collar being formed at the end of the leading portion and substantially protruding outwards with respect to the coupling adapter, wherein the collar may be configured to provide a pretension towards the connecting base portion, when the coupling adapter is mounted to the air treatment cartridge. Hence, due to the pretensioned collar, the coupling adapter may be secured against unwinding from the connecting base portion, i.e., from the air treatment cartridge, in a mounted state.

A pretension force of the pretension may act along the central axis, when the coupling adapter is mounted to the air treatment cartridge. In particular, the pretension force may act as a compressive force against the connecting base portion, when the coupling adapter is mounted to the air treatment cartridge.

The fixing means may be configured as a collar being formed at the end of the leading portion and substantially protruding outwards with respect to the coupling adapter, wherein the collar may be provided with a welded connection with the connecting base portion, when the coupling adapter is mounted to the air treatment cartridge. Hence, since being materially bonded by welding, the connecting base portion, i.e., the air treatment cartridge, and the coupling adapter may be securely fixed against rotation as well as to each other in general.

The fixing means may be configured as a collar being formed at the end of the leading portion and substantially protruding outwards with respect to the coupling adapter, wherein the collar may be provided with a glued connection with the connecting base portion, when the coupling adapter is mounted to the air treatment cartridge. Hence, since being materially bonded by gluing, the connecting base portion, i.e., the air treatment cartridge, and the coupling adapter may be securely fixed against rotation as well as to each other in general.

The leading portion may be configured to be welded or be glued to the connecting base portion in order to be provided with a welded connection or a glued connection with the connecting base portion, when the coupling adapter is mounted to the air treatment cartridge. In this case, the leading portion may be configured without a screw threaded portion, e.g., on a surface of the leading portion facing towards the connecting base portion (e.g., on a surface facing away from the coupling adapter). The welded connection or the glued connection may be established at and/or adjacent to the end of the leading portion and/or may be established on a surface of the leading portion facing towards the connecting base portion (e.g., along to the central axis and/or circumferentially).

The air treatment device may further comprise at least one first sealing element, especially elastic and isotropic sealing element, being arranged between the leading portion and the connecting base portion, when the coupling adapter is mounted to the air treatment cartridge. Hence, an individual sealing solution may be provided which may be associated with a particular combination of the air treatment cartridge and the coupling adapter and, accordingly, with a particular application. Thereby, it may further be ensured that the right cartridge (i.e., the right type of cartridge) is assembled for the right application. In this regard, the first sealing element may be formed by an elastomeric or rubber material and/or by an isotropic sealing material. Especially, the first sealing element may be formed as a single sealing element.

The air treatment device may further comprise at least one second sealing element, especially elastic and isotropic sealing element, being arranged between the trailing portion and the connecting neck portion, when the coupling adapter (e.g., together with the air treatment cartridge) is mounted to the housing structure. Hence, an individual sealing solution may be provided which may be associated with a particular combination of the housing structure and the coupling adapter and, hence, the air treatment cartridge, and therefore with a particular application. Thereby, it may further be ensured that the right cartridge (i.e., the right type of cartridge) is assembled to the correct housing structure and therefore for the right application. In this regard, the second sealing element may be formed by an elastomeric or rubber material and/or by an isotropic sealing material. Especially, the second sealing element may be formed as a single sealing element.

Each sealing element may be formed by at least one circular sealing ring (e.g., being formed as an O-ring). Circular sealing rings like O-rings are generally known as very reliable, cheap and efficient sealing solutions. Also, O-rings may provide very easy and fast mounting solutions. In this regard, O-rings, due to their isotropic and elastomeric material, may provide a structurally very simple solution of sealing the connecting neck portion and/or the connecting base portion with the coupling adapter in an axial as well as a radial fashion.

These and other aspects of the present invention will now be described in more detail, with reference to the appended drawings showing exemplary embodiments of the invention, wherein:
- Fig. 1: schematically illustrates a partial view of an air treatment device as known in the art in a cross-sectional manner;
- Fig. 2A: schematically illustrates a partial view of an air treatment device according to an exemplary embodiment of the invention in a cross-sectional manner;
- Fig. 2B: schematically illustrates a partial view of the air treatment device of Fig. 2A in a cross-sectional manner;
- Fig. 3: schematically illustrates a partial view of an air treatment device according to another exemplary embodiment of the invention in a cross-sectional manner;
- Fig. 4A: schematically illustrates a partial view of an air treatment device according to another exemplary embodiment of the invention in a cross-sectional manner;
- Fig. 4B: schematically illustrates an enlarged partial view of the air treatment device of Fig. 4A in a cross-sectional manner;
- Fig. 4C: schematically illustrates a partial view of a part of the air treatment device of Fig. 4A and 4B;
- Fig. 5: schematically illustrates a partial view of an air treatment device according to another exemplary embodiment of the invention in a cross-sectional manner;
- Fig. 6: schematically illustrates a partial view of an air treatment device according to another exemplary embodiment of the invention in a cross-sectional manner; and
- Fig. 7: schematically illustrates a partial view of an air treatment device according to another exemplary embodiment of the invention in a cross-sectional manner.

Identical or functionally equivalent elements are denoted with the same reference signs throughout the figures.

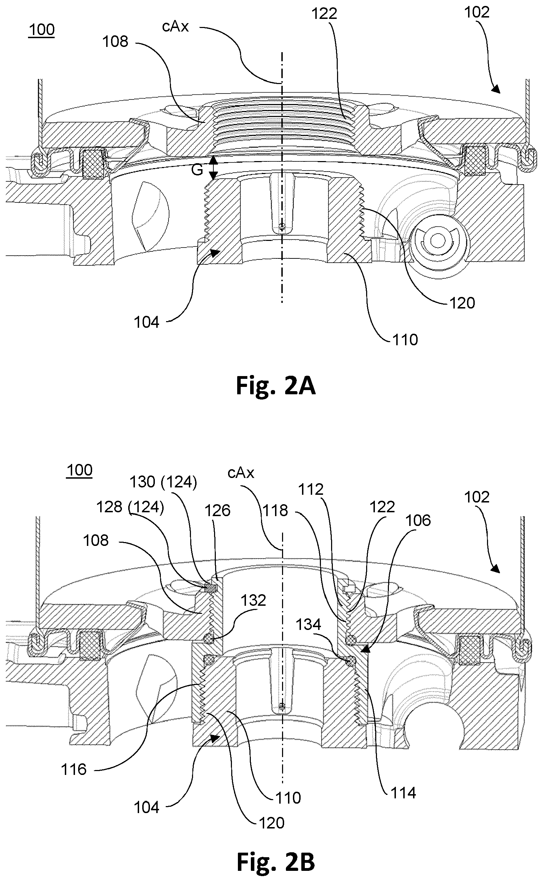

Turning to **Figs. 2A and 2B****,** a schematic partial view of an air treatment device 100 according to an exemplary embodiment of the invention is shown in a cross-sectional manner, wherein only a part of the air treatment device 100 is shown for reasons of clarity.

The air treatment device 100 for a vehicle, especially utility vehicle, comprises: an air treatment cartridge 102, a housing structure 104, and a coupling adapter 106.

The air treatment cartridge 102 is constructed to be substantially axially symmetric relative to a central axis cAx.

The air treatment cartridge 102 comprises a connecting base portion 108.

The connecting base portion 108 is constructed to be substantially axially symmetric relative to the central axis cAx. In particular, the connecting base portion 108 may substantially be tubular. For example, a fluid tract is formed through the connecting base portion 108.

The housing structure 104 comprises a connecting neck portion 110.

The connecting neck portion 110 is constructed to be substantially axially symmetric relative to a central neck axis (not shown in the figures, since the central neck axis substantially coincides with the central axis cAx, when the connecting base portion 108 and the connecting neck portion 110 are aligned to each other for mounting the air treatment cartridge 102 to the housing structure 104). In particular, the connecting neck portion 110 may substantially be tubular. For example, a fluid tract is formed through the connecting neck portion 110.

The coupling adapter 106 comprises a leading portion 112 and a trailing portion 114.

The leading portion 112 is configured to connect or be connected to the connecting base portion 108.

The trailing portion 114 is configured to connect or be connected to the connecting neck portion 110.

Referring to Fig. 2B, the leading portion 112 has a smaller diameter than the trailing portion 114.

The transition (e.g., as seen along the central axis cAx) between the leading portion 112 and the trailing portion 114 is configured as a stepped intermediate transition, e.g., a stepped intermediate transition portion, having a first face oriented towards the leading portion 112 and a second face oriented towards the trailing portion 114.

As can be seen in Fig. 2A, when the air treatment cartridge 102 and the housing structure 104 are aligned to each other for the coupling adapter 106 to be connected to the connecting base portion 108 and to the connecting neck portion 110, the connecting base portion 108 and the connecting neck portion 110 are spaced to each other by a gap G (e.g., a gap G extending along the central axis cAx, i.e., in the direction of the central axis cAx).

In this respect, aligning of the air treatment cartridge 102 and the housing structure 104 may be understood that the central axis cAx and the central neck axis coincide and that the air treatment cartridge 102 and the housing structure 104 are arranged with respect to each other as for their intended application / operation, for example, intended final mounting positions (particularly see Fig. 2A).

When comparing the housing 14 of Fig. 1 and the housing structure 104 of Fig. 2A and 2B, it can be understood that, for example, the gap G may be achieved by alteration of the design of the housing/housing structure in that the position of the connecting neck portion 110 is moved in a direction away from the air treatment cartridge 102 (i.e., moved downwards with respect to the orientation of Figs. 1 to 2B), to thereby form said gap G.

The coupling adapter 106 is configured to bridge said gap G. For example, in other words, the coupling adapter 106 is dimensioned for bridging said gap G.

As can be seen in Fig. 2B, when the coupling adapter 106 is connected to the connecting base portion 108 and to the connecting neck portion 110, the coupling adapter 106 bridges the gap for connecting the air treatment cartridge 102 and the housing structure 104 to each other.

In other words, the air treatment cartridge 102 and the housing structure 104 are mountable to each other via the coupling adapter 106.

In particular, the air treatment cartridge 102 and the housing structure 104 are only mountable to each other by usage of the coupling adapter 106 (e.g., for bridging the above-mentioned gap). Hence, mis-assembly with respect to different applications can be prevented. In particular, due to the gap G between the connecting base portion 108 of the air treatment cartridge 102 and the connecting neck portion 110 of the housing structure 104, air treatment cartridges 102 as commonly used in the industry may not be assembled to the housing structure 104 without the coupling adapter 106. Hence, the coupling adapter 106 can secure that the right cartridge 102 is used for the intended application related to the particular combination/connection of the air treatment cartridge 102 and the housing structure 104.

As can be further seen in Fig. 2B, the coupling adapter 106 is configured to establish a respective screw connection with the air treatment cartridge 102 and the housing structure 104, respectively.

Accordingly, the trailing portion 114 comprises a first screw thread portion 116 for connecting the coupling adapter 106 to the connecting neck portion 110, and the leading portion 112 comprises a second screw thread portion 118 for connecting the coupling adapter 106 to the connecting base portion 108.

The connecting neck portion 110 comprises a first counter screw thread portion 120 for establishing a screw connection between the housing structure 104 and the coupling adapter 106. In this respect, the first counter screw thread portion 120 corresponds to the first screw thread portion 116.

The connecting base portion 108 comprises a second counter screw thread portion 122 for establishing a screw connection between the air treatment cartridge 102 and the coupling adapter 106. In this respect, the second counter screw thread portion 122 corresponds to the second screw thread portion 118.

As can be seen in Figs. 2A and 2B, the first screw thread portion 116 is configured as a female screw thread portion, and the second screw thread portion 118 is configured as a male screw thread portion.

Accordingly, the first counter screw thread portion 120 is a male screw thread portion, and the second counter screw thread portion 122 is a female screw thread portion.

Hence, in a mounted state of the air treatment cartridge 102, the housing structure 104 and the coupling adapter 106, the first screw thread portion 116 of the coupling adapter 106 is engaged with the first counter screw thread portion 120 of the housing structure 104 and the second screw thread portion 118 of the coupling adapter 106 is engaged with the second counter screw thread portion 122 of the air treatment cartridge 102.

The coupling adapter 106 is configured to connect or be connected to the connecting base portion 108 in a non-removable manner, and is configured to connect or be connected to the connecting neck portion 110 in a removable manner.

In order to establish a, e.g., said, non-removable connection between the coupling adapter 106 and the connecting base portion 108, the coupling adapter 106 comprises at least one fixing means 124 being arranged at or adjacent to an end 126 of the leading portion 112 for connecting the coupling adapter 106 to the connecting base portion 108 in said non-removable manner.

In the present embodiment, the fixing means 124 is configured as a retaining ring 128 and a groove 130.

The groove 130 is configured to receive the retaining ring 128 and arranged adjacent to the end 126 of the leading portion 112 for allowing the retaining ring 128 to lock the coupling adapter 106 to the connecting base portion 108, when the coupling adapter 106 is mounted to the air treatment cartridge 102 and the retaining ring 128 is received by the groove 130.

As can be seen in Fig. 2B, due to the retaining ring 128, the coupling adapter 106 can be (reliably) held in its mounted state with the connecting base portion 108, i.e., in a non-removable manner.

In other words, the groove 130 is arranged on the leading portion 112, in particular, adjacent to the end 126 of the leading portion 112, such as to allow the retaining ring 128 to act as a shoulder against the connecting base portion 108, when the coupling adapter 106 is mounted to the air treatment cartridge 102 and the retaining ring 128 is received by the groove 130, to thereby fix the coupling adapter 106 to the air treatment cartridge 102, non-removably.

Further, the air treatment device 100 comprises at least one first sealing element 132 and at least one second sealing element 134. In the present embodiment, the air treatment device 100 comprises a first sealing element 132 and a second sealing element 134.

Each sealing element 132, 134 is an elastic and isotropic sealing element.

In particular, each sealing element 132, 134 is formed by a circular sealing ring, e.g., being formed as an O-ring.

The first sealing element 132 is arranged between the leading portion 112 and the connecting base portion 108, when the coupling adapter 106 is mounted to the air treatment cartridge 102.

In particular, referring to the above-mentioned stepped intermediate transition between the leading portion 112 and the trailing portion 114, the first sealing element 132 is arranged adjacent to (e.g., between, e.g., in the corner of) the leading portion 112 and the first face.

In other words, the first sealing element 132 is arranged adjacent to (e.g., between, e.g., in the corner of) the leading portion 112 and the first face as well as the connecting base portion 108, when the coupling adapter 106 is mounted to the air treatment cartridge 102.

The second sealing element 134 is arranged between the trailing portion 114 and the connecting neck portion 110, when the coupling adapter 106 is mounted to the housing structure 104.

In particular, referring to the above-mentioned stepped intermediate transition between the leading portion 112 and the trailing portion 114, the second sealing element 134 is arranged adjacent to (e.g., between, e.g., in the corner of) the trailing portion 114 and the second face.

In other words, the second sealing element 134 is arranged adjacent to (e.g., between, e.g., in the corner of) the trailing portion 114 and the second face as well as the connecting neck portion 110, when the coupling adapter 106 is mounted to the housing structure 104.

The present exemplary embodiment of the invention (as well as the further exemplary embodiments particularly being described further below) provides a simple and effective solution that the air treatment cartridge 102 and the housing structure 104 cannot be assembled without the coupling adapter 106, to thereby prevent mis-assembly with respect to different applications (e.g., of different cartridges, i.e., the air treatment device 100). In particular, due to the gap G between the connecting base portion 108 of the air treatment cartridge 102 and the connecting neck portion 110 of the housing structure 104, air treatment cartridges as commonly used in the industry (e.g., as shown in Fig. 1) cannot be assembled to the housing structure 104 without the coupling adapter 106. The coupling adapter 106 may be designed to have a unique design and/or configuration being assigned/dedicated to a particular application (e.g., due to different thread configurations and/or dimensions). Hence, the coupling adapter 106 may secure that the right cartridge is used for the intended application related to the particular combination/connection of the air treatment cartridge 102 and the housing structure 104. However, the housing structure 104 and/or coupling adapter 106 may also be designed and/or configured to allow the usage of air treatment cartridges as commonly used in the industry, wherein the coupling adapter 106 may correspondingly be configured to be assigned to a particular application. Still further, due to the gap G between the connecting base portion 108 of the air treatment cartridge 102 and the connecting neck portion 110 of the housing structure 104, the connecting neck portion 110 may be allowed to have increased dimensions, e.g., an increased diameter (e.g., in comparison to the housing shown in Fig. 1, which may represent a housing commonly used in the industry), in particular, for having an improved strength due to more material.

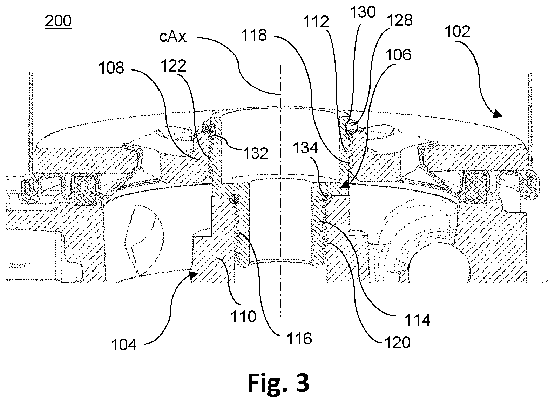

Now turning to **Fig. 3****,** a schematic partial view of an air treatment device 200 according to another exemplary embodiment of the invention is shown in a cross-sectional manner, wherein only a part of the air treatment device 200 is shown for reasons of clarity.

The air treatment device 200 of Fig. 3 is substantially the same as described above, in particular, with respect to the air treatment device 100 of Figs. 2A and 2B, so that only the differences shall be described in the following.

Referring to Fig. 3, the leading portion 112 has a larger diameter than the trailing portion 114 (i.e., compared to Fig. 2B, the proportion is reversed).

The transition (e.g., as seen along the central axis cAx) between the leading portion 112 and the trailing portion 114 is configured as a/the stepped intermediate transition, e.g., a/the stepped intermediate transition portion, having a/the first face oriented towards the leading portion 112 and a/the second face oriented towards the trailing portion 114.

As can be seen in Fig. 3, the first screw thread portion 116 is configured as a male screw thread portion, and the second screw thread portion 118 is also configured as a male screw thread portion.

Accordingly, the first counter screw thread portion 120 is a female screw thread portion, and the second counter screw thread portion 122 is a female screw thread portion.

Hence, an inverse configuration with respect to the first screw threads is applied in the embodiment of Fig. 3 in comparison to the embodiment of Fig. 2B.

The fixing means 124 of Fig. 3 is also configured as a/the retaining ring 128 and a/the groove 130.

Hence, due to the retaining ring 128, the coupling adapter 106 can be (reliably) held in its mounted state with the connecting base portion 108, i.e., in a non-removable manner.

Further, the air treatment device 200 also comprises at least one first sealing element 132 and at least one second sealing element 134. In the present embodiment, the air treatment device 200 comprises a/the first sealing element 132 and a/the second sealing element 134.

The first sealing element 132 is arranged between the leading portion 112 and the connecting base portion 108, when the coupling adapter 106 is mounted to the air treatment cartridge 102.

In particular, the first sealing element 132 is arranged adjacent to (e.g., between, e.g., in the corner of) the leading portion 112 and a face of the retaining ring 128 oriented towards the trailing portion 114 and/or the connecting base portion 108, particularly, the face of the retaining ring 128 fixing the coupling adapter 106 to the air treatment cartridge 102.

In other words, the first sealing element 132 is arranged adjacent to (e.g., between, e.g., in the corner of) the leading portion 112 and said face of the retaining ring 128 as well as the connecting base portion 108, when the coupling adapter 106 is mounted to the air treatment cartridge 102.

The second sealing element 134 is arranged between the trailing portion 114 and the connecting neck portion 110, when the coupling adapter 106 is mounted to the housing structure 104.

In particular, referring to the above-mentioned stepped intermediate transition between the leading portion 112 and the trailing portion 114, the second sealing element 134 is arranged adjacent to (e.g., between, e.g., in the corner of) the trailing portion 114 and the second face.

In other words, the second sealing element 134 is arranged adjacent to (e.g., between, e.g., in the corner of) the trailing portion 114 and the second face as well as the connecting neck portion 110, when the coupling adapter 106 is mounted to the housing structure 104.

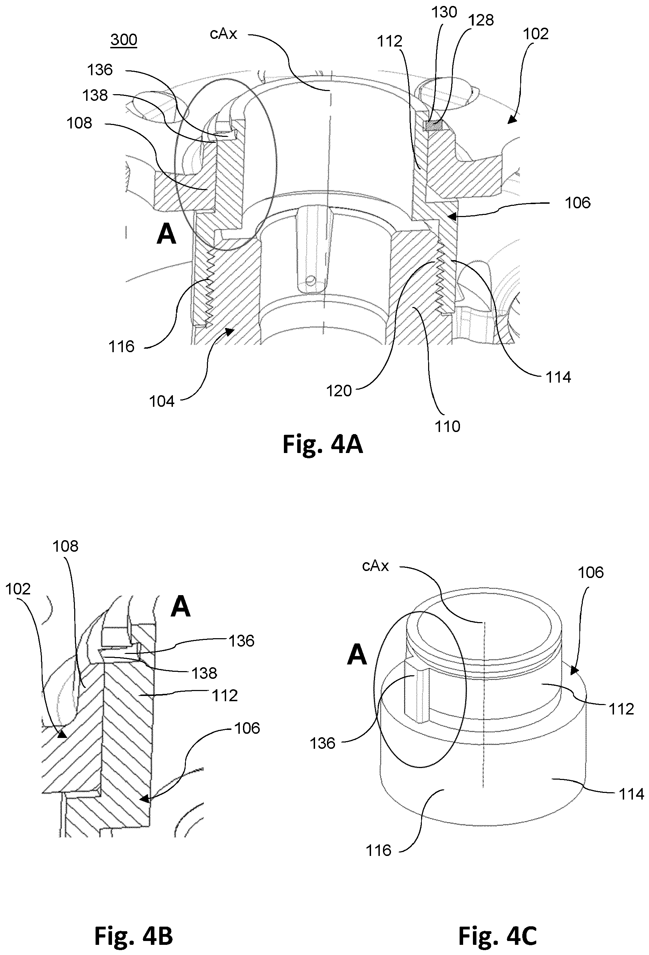

Now referring to **Figs. 4A, 4B and 4C****,** a schematic partial view of an air treatment device 300 according to another exemplary embodiment of the invention is shown in a cross-sectional manner, wherein only a part of the air treatment device 300 is shown for reasons of clarity.

The air treatment device 300 of Figs. 4A to 4C is substantially the same as described above, in particular, with respect to the air treatment device 100 of Figs. 2A and 2B, so that only the differences shall be described in the following.

As can be seen in Figs. 4A and 4B, the coupling adapter 106 is configured to establish a/the screw connection with the housing structure 104 (as described above) and a form-fitting connection with the air treatment cartridge 102.

In this respect, the leading portion 112 comprises a non-threaded portion for connecting the coupling adapter 106 to the connecting base portion 108, and the connecting base portion 108 also comprises a non-threaded portion for establishing a connection between the air treatment cartridge 102 and the coupling adapter 106. In this respect, both non-threaded portions are configured in a corresponding manner with respect to each other.

The leading portion 112 may comprise one or more protrusions 136 and/or one or more recesses. The one or more protrusions 136 and/or the one or more recesses may be formed in and/or on a surface of leading portion 112 facing away (e.g., outwards) from the coupling adapter 106. In the present embodiment, as an example, the leading portion 112 comprises one protrusion 136 as can be seen in the marked field A of Fig. 4C.

The connecting base portion 108 may comprise one or more recesses 138 and/or one or more protrusions in a corresponding manner with respect to the one or more protrusions 136 and/or the one or more recesses of the leading portion 112. In particular, each protrusion 136 may be associated with a corresponding recess 138, and vice versa. In the present embodiment, as an example, the connecting base portion 108 comprises one recess 138 as can be seen in the enlarged view A of Fig. 4B. The recess 138 is formed in a corresponding manner with respect to the protrusions 136 of the leading portion 112.

When the air treatment cartridge 102 is connected to the coupling adapter 106, the one or more protrusions 136 and/or the one or more recesses 138 of the connecting base portion 108 and the leading portion 112 may be engaged with each other in a respective corresponding manner. In particular, each protrusion 136 may be substantially accommodated in a corresponding recess 138. Hence, in the present embodiment, the protrusion 136 of the leading portion 112 and the recess 138 of the connecting base portion 108 are engaged with each other in a respective corresponding manner, when the air treatment cartridge 102 is connected to the coupling adapter 106 as shown in Figs. 4A and 4B. As can be particularly seen in Fig. 4B, the protrusion 136 is substantially accommodated in the recess 138.

Accordingly, due to the protrusion 136 and the recess 138, the air treatment cartridge 102 and the coupling adapter 106 are reliably fixed to each other, in particular, with respect to rotation. In other words, the air treatment cartridge 102 is rotationally fixed with respect to the coupling adapter 106.

Further, it should be understood that the air treatment device 300 shown in Figs. 4A to 4C also comprises at least one first sealing element 132 and at least one second sealing element 134, in particular, a/the first sealing element 132 and a/the second sealing element 134. However, for reasons of clarity and simplification, those sealing elements 132, 134 are not explicitly depicted in Figs. 4A to 4C.

The first sealing element 132 is arranged or arrangeable between the leading portion 112 and the connecting base portion 108, when the coupling adapter 106 is mounted to the air treatment cartridge 102.

In particular, referring to the before-mentioned stepped intermediate transition between the leading portion 112 and the trailing portion 114, the first sealing element 132 is arranged or arrangeable adjacent to (e.g., between, e.g., in the corner of) the leading portion 112 and the first face.

In other words, the first sealing element 132 is arranged or arrangeable adjacent to (e.g., between, e.g., in the corner of) the leading portion 112 and the first face as well as the connecting base portion 108, when the coupling adapter 106 is mounted to the air treatment cartridge 102.

Hence, the first sealing element 132 of the embodiment of Figs. 4A to 4C is substantially arranged or substantially arrangeable in the same way as the first sealing element 132 of the embodiment of Fig. 2B.

The second sealing element 134 is arranged or arrangeable between the trailing portion 114 and the connecting neck portion 110, when the coupling adapter 106 is mounted to the housing structure 104.

In particular, referring to the before-mentioned stepped intermediate transition between the leading portion 112 and the trailing portion 114, the second sealing element 134 is arranged or arrangeable adjacent to (e.g., between, e.g., in the corner of) the trailing portion 114 and the second face.

In other words, the second sealing element 134 is arranged or arrangeable adjacent to (e.g., between, e.g., in the corner of) the trailing portion 114 and the second face as well as the connecting neck portion 110, when the coupling adapter 106 is mounted to the housing structure 104.

Hence, the second sealing element 134 of the embodiment of Figs. 4A to 4C is substantially arranged or substantially arrangeable in the same way as the second sealing element 134 of the embodiment of Fig. 2B.

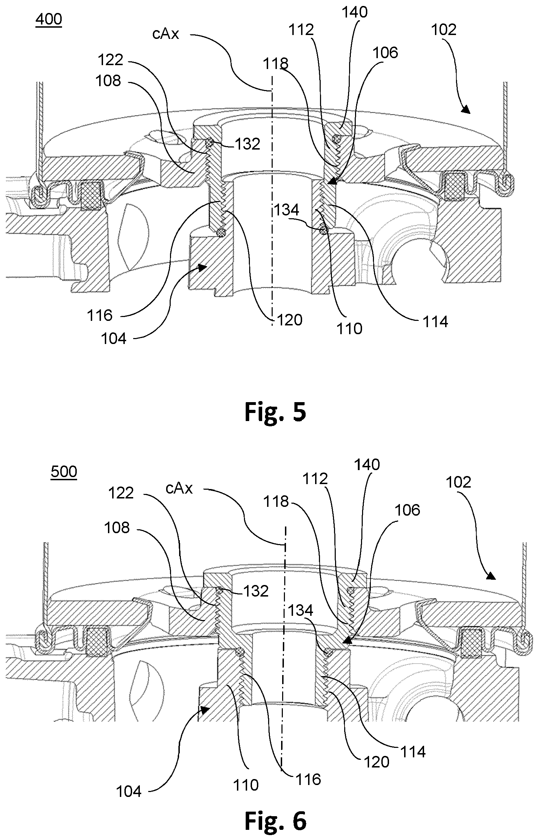

Now referring to **Fig. 5****,** a schematic partial view of an air treatment device 400 according to another exemplary embodiment of the invention is shown in a cross-sectional manner, wherein only a part of the air treatment device 400 is shown for reasons of clarity.

The air treatment device 400 of Fig. 5 is substantially the same as described above, in particular, with respect to the air treatment device 100 of Figs. 2A and 2B, so that only the differences shall be described in the following.

In the present embodiment, the coupling adapter 106 is also configured to connect or be connected to the connecting base portion 108 in a non-removable manner, and is configured to connect or be connected to the connecting neck portion 110 in a removable manner.

In order to establish a, e.g., said, non-removable connection between the coupling adapter 106 and the connecting base portion 108, the coupling adapter 106 comprises at least one fixing means 124 being arranged at or adjacent to an end 126 of the leading portion 112 for connecting the coupling adapter 106 to the connecting base portion 108 in said non-removable manner.

In the embodiment shown in Fig. 5, the fixing means 124 is configured as a collar 140.

The collar 140 is formed at the end of the leading portion 112 and substantially protrudes outwards with respect to the coupling adapter 106.

The collar 140 is configured to provide a pretension towards the connecting base portion 108, when the coupling adapter 106 is mounted to the air treatment cartridge 102. For example, the collar 140 may be formed with an inclination facing towards the trailing portion 114 (i.e., downwards according to the orientation of Fig. 5) such as to allow to provide said pretension, when the coupling adapter 106 is screwed to the air treatment cartridge 102 and has reached its final mounting state.

Hence, due to the pretensioned collar 140, the coupling adapter 106 can be secured against unwinding from the connecting base portion 108, i.e., from the air treatment cartridge 102, in a mounted state.

A pretension force of the pretension acts along the central axis cAx, when the coupling adapter 106 is mounted to the air treatment cartridge 102. In particular, the pretension force acts as a compressive force against the connecting base portion 108, when the coupling adapter 106 is mounted, in particular, screwed, to the air treatment cartridge 102.

However, it may alternatively or additionally be conceivable that:
- firstly, the fixing means 124 may be configured as a collar 140 being formed at the end of the leading portion 112 and substantially protruding outwards with respect to the coupling adapter 106, wherein the collar 140 may be provided with a welded connection with the connecting base portion 108, when the coupling adapter 106 is mounted to the air treatment cartridge 102, and/or
- secondly, the fixing means 124 may be configured as a collar 140 being formed at the end of the leading portion 112 and substantially protruding outwards with respect to the coupling adapter 106, wherein the collar 140 may be provided with a glued connection with the connecting base portion 108, when the coupling adapter 106 is mounted to the air treatment cartridge 102.

As can be seen in Fig. 5, the first sealing element 132 is arranged between the leading portion 112 and the connecting base portion 108, when the coupling adapter 106 is mounted to the air treatment cartridge 102.

In particular, the first sealing element 132 is arranged adjacent to (e.g., between, e.g., in the corner of) the leading portion 112 and the collar 140.

In other words, the first sealing element 132 is arranged adjacent to (e.g., between, e.g., in the corner of) the leading portion 112 and the collar 140 as well as the connecting base portion 108, when the coupling adapter 106 is mounted to the air treatment cartridge 102.

The second sealing element 134 is arranged between an end of the trailing portion 114 and the connecting neck portion 110, when the coupling adapter 106 is mounted to the housing structure 104.

Now referring to **Fig. 6****,** a schematic partial view of an air treatment device 500 according to another exemplary embodiment of the invention is shown in a cross-sectional manner, wherein only a part of the air treatment device 500 is shown for reasons of clarity.

The air treatment device 500 of Fig. 6 is substantially the same as described above, in particular, with respect to the air treatment device 400 of Fig. 5, so that only the differences shall be described in the following.

As can be seen in Fig. 6, the first screw thread portion 116 is configured as a male screw thread portion, and the second screw thread portion 118 is also configured as a male screw thread portion.

Accordingly, the first counter screw thread portion 120 is a female screw thread portion, and the second counter screw thread portion 122 is a female screw thread portion.

Hence, an inverse configuration with respect to the first screw threads is applied in the embodiment of Fig. 6 in comparison to the embodiment of Fig. 5.

The first sealing element 132 of Fig. 6 is arranged in the same way as the first sealing element 132 of Fig. 5, wherein the second sealing element 134 of Fig. 6 is arranged in the same way as the second sealing element 134 of Fig. 3.

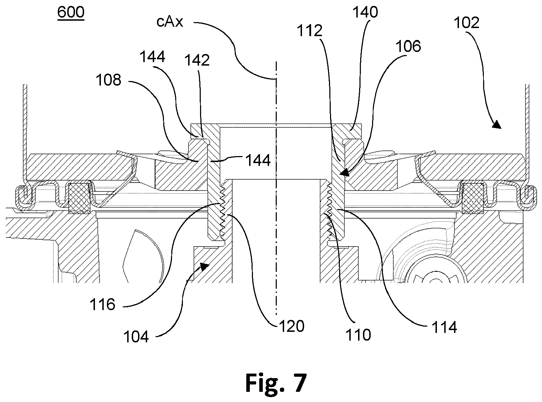

Now referring to **Fig. 7****,** a schematic partial view of an air treatment device 600 according to another exemplary embodiment of the invention is shown in a cross-sectional manner, wherein only a part of the air treatment device 600 is shown for reasons of clarity.

The air treatment device 600 of Fig. 7 is substantially the same as described above, in particular, with respect to the air treatment device 400 of Fig. 5, so that only the differences shall be described in the following.

In this respect, the leading portion 112 comprises a non-threaded portion for connecting the coupling adapter 106 to the connecting base portion 108, and the connecting base portion 108 also comprises a non-threaded portion for establishing a connection between the air treatment cartridge 102 and the coupling adapter 106. In this respect, both non-threaded portions are configured in a corresponding manner with respect to each other.

In the present embodiment of Fig. 7, the leading portion 112 is configured to be either welded or glued to the connecting base portion 108 in order to be provided with a welded connection 142 or a glued connection 144 with the connecting base portion 108, when the coupling adapter 106 is mounted to the air treatment cartridge 102.

The welded connection 142 or the glued connection 144 can be / is established at and/or adjacent to the end of the leading portion 112 and/or can be / is established on a surface of the leading portion 112 facing towards the connecting base portion 108. For example, the leading portion 112 comprises the above-mentioned collar 140 and the welded connection 142 is established between a surface of the collar 140 facing towards the trailing end 114 and being in contact with the connecting base portion 108. In particular, a spot-welded connection can be established. Further, in another example, the surface of the collar 140 facing towards the trailing end 114 and being in contact with the connecting base portion 108 can be glued to the connecting base portion 108, or the surface of the leading end 112 facing outwards with respect to the coupling adapter 106 (e.g., above-mentioned non-threaded portion of the leading end 112) can be used for gluing the coupling adapter 106 to the connecting base portion 108. Hence, the respective glued connection 144 can correspondingly be provided.

Further, it should be understood that the air treatment device 600 shown in Fig. 7 also comprises at least one first sealing element 132 and at least one second sealing element 134, in particular, a/the first sealing element 132 and a/the second sealing element 134. However, for reasons of clarity and simplification, those sealing elements 132, 134 are not explicitly depicted in Fig. 7.

In this respect, the first sealing element 132 and the second sealing element 134 are arranged in the same manner as shown in the embodiment of Fig. 5.

### REFERENCE SIGNS

- 10: air treatment device (as known in the art)
- 12: connection (as known in the art)
- 14: housing (as known in the art)
- 16: cartridge (as known in the art)

- 100: air treatment device
- 102: air treatment cartridge
- 104: housing structure
- 106: coupling adapter
- 108: connecting base portion
- 110: connecting neck portion
- 112: leading portion
- 114: trailing portion
- 116: first screw thread portion
- 118: second screw thread portion
- 120: first counter screw thread portion
- 122: second counter screw thread portion
- 124: fixing means
- 126: end of leading portion
- 128: retaining ring
- 130: groove
- 132: first sealing element
- 134: second sealing element
- 136: protrusion of leading portion
- 138: recess of connecting base portion
- 140: collar
- 142: welded connection
- 144: glued connection

- 200: air treatment device

- 300: air treatment device
- 400: air treatment device

- 500: air treatment device

- 600: air treatment device

- cAx: central axis
- G: gap

## Claims

1. Air treatment device (100, 200, 300, 400, 500, 600) for a vehicle, especially utility vehicle, the air treatment device (100, 200, 300, 400, 500, 600) comprising:
an air treatment cartridge (102) having a connecting base portion (108),
a housing structure (104) having a connecting neck portion (110), and
a coupling adapter (106) having a leading portion (112) configured to connect or be connected to the connecting base portion (108) and a trailing portion (114) configured to connect or be connected to the connecting neck portion (110),
wherein the air treatment cartridge (102) and the housing structure (104) are connectable or connected to each other by means of the coupling adapter (106).

2. The air treatment device (100, 200, 300, 400, 500, 600) according to claim 1,
**characterized in that**
wherein, when the air treatment cartridge (102) and the housing structure (104) are aligned to each other for the coupling adapter (106) to be connected to the connecting base portion (108) and to the connecting neck portion (110), the connecting base portion (108) and the connecting neck portion (110) are spaced to each other by a gap (G),
wherein, when the coupling adapter (106) is connected to the connecting base portion (108) and to the connecting neck portion (110), the coupling adapter (106) bridges the gap (G) for connecting the air treatment cartridge (102) and the housing structure (104) to each other.

3. The air treatment device (100, 200, 300, 400, 500, 600) according to claim 1 or 2,
**characterized in that**
the trailing portion (114) comprises a first screw thread portion (116) for connecting the coupling adapter (106) to the connecting neck portion (110), wherein the connecting neck portion (110) comprises a first counter screw thread portion (120) corresponding to the first screw thread portion (116).

4. The air treatment device (100, 200, 300, 400, 500, 600) according to claim 3,
**characterized in that**
the first screw thread portion (116) is configured as a female screw thread portion or as a male screw thread portion.

5. The air treatment device (100, 200, 400, 500) according to one of claims 1 to 4,
**characterized in that**
the leading portion (112) comprises a second screw thread portion (118) for connecting the coupling adapter (106) to the connecting base portion (108), wherein the connecting base portion (108) comprises a second counter screw thread portion (122) corresponding to the second screw thread portion (118), wherein, optionally, the second screw thread portion (118) is configured as a male screw thread portion.

6. The air treatment device (300) according to one of claims 1 to 4,
**characterized in that**
the leading portion (112) comprises one or more protrusions (136) and/or one or more recesses, and
the connecting base portion (108) comprises one or more recesses (138) and/or one or more protrusions in a corresponding manner with respect to the one or more protrusions (136) and/or the one or more recesses of the leading portion (112),
wherein, when the air treatment cartridge (102) is connected to the coupling adapter (106), the one or more protrusions (136) and/or the one or more recesses (138) of the connecting base portion (108) and the leading portion (112) are engaged with each other in a respective corresponding manner.

7. The air treatment device (100, 200, 300, 400, 500, 600) according to one of claims 1 to 6,
**characterized in that**
the coupling adapter (106) is configured to connect or be connected to the connecting base portion (108) in a non-removable manner, and
the coupling adapter (106) is configured to connect or be connected to the connecting neck portion (110) in a removable manner.

8. The air treatment device (100, 200, 300, 400, 500, 600) according to claim 7,
**characterized in that**
the coupling adapter (106) comprises at least one fixing means (124) being arranged at or adjacent to an end of the leading portion (112) for connecting the coupling adapter (106) to the connecting base portion (108) in a non-removable manner.

9. The air treatment device (100, 200, 300) according to claim 8,
**characterized in that**
the fixing means (124) is configured as a retaining ring (128) and a groove (130) configured to receive the retaining ring (128) and arranged adjacent to the end of the leading portion (112) for allowing the retaining ring (128) to lock the coupling adapter (106) to the connecting base portion (108), when the coupling adapter (106) is mounted to the air treatment cartridge (102) and the retaining ring (128) is received by the groove (130).

10. The air treatment device (400, 500) according to claim 8,
**characterized in that**
the fixing means (124) is configured as a collar (140) being formed at the end of the leading portion (112) and substantially protruding outwards with respect to the coupling adapter (106), wherein the collar (140) is configured to provide a pretension towards the connecting base portion (108), when the coupling adapter (106) is mounted to the air treatment cartridge (102).

11. The air treatment device (400, 500) according to claim 8,
**characterized in that**
the fixing means (124) is configured as a collar (140) being formed at the end of the leading portion (112) and substantially protruding outwards with respect to the coupling adapter (106), wherein the collar (140) is provided with a welded connection (142) with the connecting base portion (108), when the coupling adapter (106) is mounted to the air treatment cartridge (102).

12. The air treatment device (400, 500) according to claim 8,
**characterized in that**
the fixing means (124) is configured as a collar (140) being formed at the end of the leading portion (112) and substantially protruding outwards with respect to the coupling adapter (106), wherein the collar (140) is provided with a glued connection (144) with the connecting base portion (108), when the coupling adapter (106) is mounted to the air treatment cartridge (102).

13. The air treatment device (600) according to one of claims 1 to 4,
**characterized in that**
the leading portion (112) is configured to be welded or be glued to the connecting base portion (108) in order to be provided with a welded connection (142) or a glued connection (144) with the connecting base portion (108), when the coupling adapter (106) is mounted to the air treatment cartridge (102).

14. The air treatment device (100, 200, 300, 400, 500, 600) according to one of claims 1 to 13,
**characterized in that**
the air treatment device (100, 200, 300, 400, 500, 600) further comprises at least one first sealing element (132), especially elastic and isotropic sealing element, being arranged between the leading portion (112) and the connecting base portion (108), when the coupling adapter (106) is mounted to the air treatment cartridge (102).

15. The air treatment device (100, 200, 300, 400, 500, 600) according to one of claims 1 to 14,
**characterized in that**
the air treatment device (100, 200, 300, 400, 500, 600) further comprises at least one second sealing element (134), especially elastic and isotropic sealing element, being arranged between the trailing portion (114) and the connecting neck portion (110), when the coupling adapter (106) is mounted to the housing structure (104).

16. The air treatment device (100, 200, 300, 400, 500, 600) according to claim 14 or 15,
**characterized in that**
each sealing element (132, 134) is formed by at least one circular sealing ring.
